Europäisches Patentamt

European Patent Office

Office européen des brevets

(19)

(11) Veröffentlichungsnummer: **0 371 974 B1**

(12) **EUROPÄISCHE PATENTSCHRIFT**

(45) Veröffentlichungstag der Patentschrift :
27.12.91 Patentblatt 91/52

(51) Int. Cl.⁵ : **B65G 47/91**

(21) Anmeldenummer : 88905357.5

(22) Anmeldetag : 23.06.88

(86) Internationale Anmeldenummer :
**PCT/DE88/00375**

(87) Internationale Veröffentlichungsnummer :
**WO 89/00965 09.02.89 Gazette 89/04**

(54) HUBSAUGER FÜR EINE TRANSPORTEINRICHTUNG.

(30) Priorität : 28.07.87 DE 3724878

(43) Veröffentlichungstag der Anmeldung :
13.06.90 Patentblatt 90/24

(45) Bekanntmachung des Hinweises auf die
Patenterteilung :
27.12.91 Patentblatt 91/52

(84) Benannte Vertragsstaaten :
**BE FR GB IT NL**

(56) Entgegenhaltungen :
DE-A- 3 101 864
GB-A- 1 337 743
US-A- 3 223 442
US-A- 3 485 393

(73) Patentinhaber : **KLEIN, Manfred**
**Richard-Wagner-Str. 16**
**W-7255 Rutesheim (DE)**

(72) Erfinder : **KLEIN, Manfred**
**Richard-Wagner-Str. 16**
**W-7255 Rutesheim (DE)**

(74) Vertreter : **Schuster, Gregor, Dipl.-Ing.**
**Patentanwälte Schuster & Thul**
**Wiederholdstrasse 10**
**W-7000 Stuttgart 1 (DE)**

## Beschreibung

### Stand der Technik

Die Erfindung geht aus von einem Hubsauger für eine Transporteinrichtung von Werkstücken mit Ansaugflächen nach der Gattung des Hauptanspruchs. Mit derartigen Hubsaugern werden beispielsweise in der Fertigung Werkstücke angesaugt und angehoben, um danach transportiert zu werden. Dies ist beispielsweise in der Blechverarbeitung üblich, indem ein herausgetrenntes Blechstück zur weiteren Verarbeitung aus dem Grundblech herausgehoben wird, wonach dann entweder das Grundblech wegtransportiert wird oder mit dem Hubsauger das herausgetrennte Stück. Nach Positionieren wird dann das Werkstück wieder vom Hubsauger gelöst, um weiterverar-beitet zu werden. So können beispielsweise eine ganze Reihe von deratigen Hubsaugern parallel angeordnet sein, um so aus einer großen Tafel entsprechend herausgeklinkte Stücke aufznehmen. Durch entsprechende Steuerungen ist es auch bekannt, nur einen Teil der ausgeklinkten Stücke herauszugreifen oder nur einen Teil der an sich vorhandenen Hubsauger zu aktivieren.

Bei einem bekannten Hubsauger dieser Art, bei dem der Arbeitszylinder als Gleichdruckzylinder ausgebildet ist, durchdringt die Kolbenstange beide Stirnseiten des Zylinders, und die hohl ausgebildete Kolbenstange trägt an einem Ende den Saugnapf, während am anderen Ende ein Anschluß für den Unterdruck vorgesehen ist, der über ein Wegeventil gesteuert wird. Der Hub des Saugnapfes wird ebenfalls über eis Wegeventil gesteuert, das die Druckquelle bzw. die Entlüftung mit dem ersten oder dem zweiten Arbeitsraum verbindet.

Der Steuerungsaufwand eines solchen Hubsaugers ist verhältnismäßig groß, da für jeden Hubsauger zwei unanhängig voneinander arbeitende Wegeventile notwendig sind, wobei diese Wegeventile in Abstimmung zueinander und zu weiteren Hubsaugerventilen fein abgestimmt sein müssen. Letzteres macht die ganze Steuereinrichtung kompliziert und erfordert eine Anzahl zusätzlicher Positionsgeber.

### Vorteile der Erfindung

Der erfindungsgemäße Hubsauger mit den kennzeichnenden Merkmalen des Hauptanspruchs hat demgegenüber den Vorteil, daß nur ein Wegeventil erforderlich ist und die Steueraufgaben des zweiten Wegeventils durch die Verbindung des ersten Arbeitsraumes mit dem Saugnapf als automatische Steuerung integriert werden. Die Verwendung nur eines Wegeventils armöglicht eine wesentliche Vereinfachung der Steuerung, da verschiedene Weggeber nicht mehr erforderlich sind, so daß auch auf Programmsteuerteile verzichtet werden kann.

Nach einer weiteren Ausgestaltung der Erfindung ist in der Leitung zwischen dem zweiten Arbeitsraum und dem Wegeventil ein in Richtung Arbeitsraum sperrendes Rückschlagventil angeordnet, wobei dieses Rückschlagventil durch einen Bypass umgangen ist, in welchem ein pneumatisches Zeitglied in Richtung Wegeventil vorhanden ist. Hierdurch wird erreicht, daß der Hub mit dem angesaugten Werkstück kontrolliert erfolgt.

Nach einer weiteren vorteilhaften Ausgestaltung der Erfindung ist das 4/2-Wegeventil pneumatisch gesteuert, wobei der Steuerdruck über ein Druckventil und eine Steuerleitung aus der zwischen 4/2-Wegeventil und erstem Arbeitsraum vorhandenen Leitung entnommen wird. Das Druckventil ist hierbei so eingestellt, daß es erst dann öffnet, wenn der Saugnapf auf dem Werkstück aufliegt und dadurch der Druck in der entsprechenden Leitung steigt, so daß durch diese Automatisierung die Umschaltung in Anhebrichtung immer erst dann erfolgt, wenn der Saugnapf tatsächlich auf dem Werkstück aufliegt.

Nach einer weiteren vorteilhaften Ausgestaltung der Erfindung sind mehrere Arbeitszylinder vorhanden, und es ist mit jedem Arbeitszylinder ein Steuerblock derart verbunden, daß auf zusätliche Leitungen verzichtet werden kann. In einem solchen Steuerblock ist das 4/2-Wegeventil mit der ganzen Steuereinrichtung, das Zeitglied und eine Injektordüse angeordnet, mit der der Unterdruck erzeugt wird. Jeder dieser Steuerblocks weist eine Hauptleitung zu einer Druckquelle auf, wobei in dieser Hauptleitung ein 3/2-Wegeventil angeordnet ist. Durch das Verbinden des Arbeitszylinders unmittelbar mit dem Steuerblock dienen als Leitungen statt Schläuchen oder Rohren direkte Kanäle im Gehäuse des Steuerblocks, so daß weniger Fehlerquellen entstehen können, eine geringere Verschmutzungsgefahr besteht und auch Kosten eingespart werden.

Weitere Vorteile und vorteilhafte Ausgestaltungen der Erfindung sind der nachfolgendes Beschreibung, der Zeichnung und den Ansprüchen entnehmbar.

### Zeichnung

Ein Ausführungsbeispiel des Gegenstandes der Erfindung ist in der Zeichnung dargestellt und im folgenden näher beschrieben. Es zeigen:

Fig. 1 einen Arbeitszylinder mit Saugnapf im Längsschnitt und einen an den Arbeitszylinder geflanschten Steuerblock in der Außenansicht;

Fig. 2 einen Schaltplan eines Hubsaugers mit Steuerblock und

Fig. 3 einen Schaltplan von mehreren susammengeschalteten Hubsaugern

Beschreibung des Ausführungsbeispiels

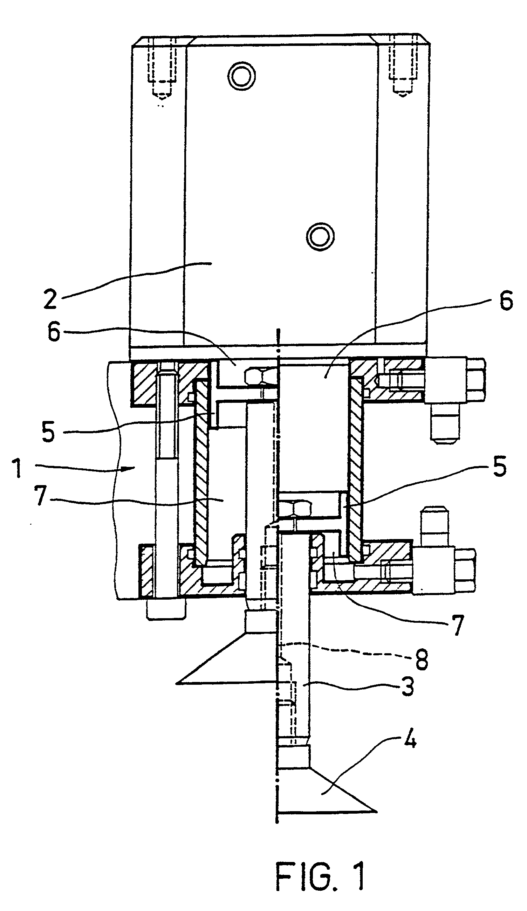

Bei dem in Fig. 1 dargestellten Hubsauger ist an einen Arbeitszylinder 1 ein pneumatisches Steuergerät 2 geflanscht und über nicht dargestellte Kanäle pneumatisch verbunden. Am freien Ende der Kolbenstange 3 des Arbeitszylinders 1 ist ein Saugnapf 4 befestigt. Die Kolhenstange 3 ist mit der dem Saugnapf 4 abgewandten Seite an einem Kolben 5 befestigt. Der Kolben 5 unterteilt den Arbeitszylinder 1 in einen ersten Arbeitsraum 6 und einen zweiten Arbeitsraum 7. Der erste Arbeitsraum 6 ist über eine Mittelbohrung 8 der Kolbenstange 3 mit dem Innenraum des Saugnapfes 4 verbunden. Beide Arbeitsräume 6 und 7 sind mit dem Steuerblock 2 durch Kanäle verbunden. Der Arbeitszylinder 1 ist in zwei Arbeitsstellungen dargestellt, nämlich in der linken Hälfte des Schnittes in eingefahrener Stellung, in der rechten Hälfte in ausgefahrener Stellung.

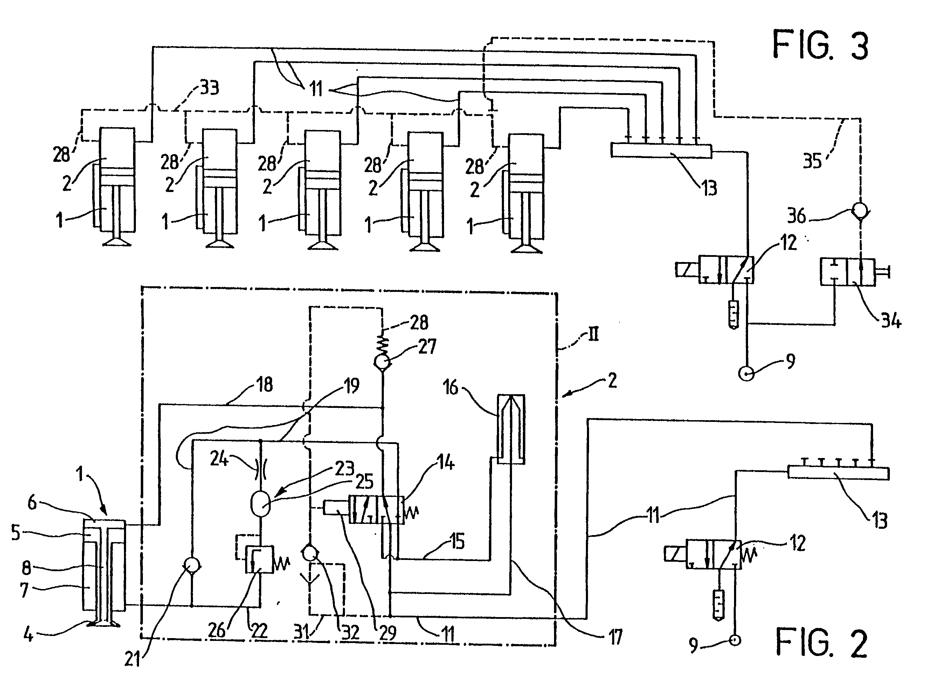

In Fig. 2 ist innerhalb des Strichpunktiert dargestellten Rahmens II ein Schaltplan des pneumatischen Steuerblocks 2, also die Innereien desselben dargestellt, die in bekannter Weise in dem in Fig. 1 nur in der Ansicht dargestellten Gehäuse untergebracht sind. An diesem pneumatischen Steuerblock 2 ist dann links in der Figur dargestellt der Arbeitzylinder 1 angeschlossen und rechts dargestellt, eine Druckluftquelle 9 über eine Hauptleitung 11, in der ein 3/2-Magnetventil 12 angeordnet ist und ein Verteiler 13 mit Anschlüssen zu weiteren Hubsaugern.

Im Steuerblock 2 ist ein pneumatisch gesteuertes 5/2-Wegeventil 14 vorhanden, wobei stattdessen auch ein 4/2-Wegeventil dienen kann. Dieses Wegeventil 14 ist einerseits mit der Hauptleitung 11 und mit einer Saugleitung 15 einer Injektordüse 16 verbunden, in welcher über eine Blasleitung 17, die von der Hauptleitung 11 abzweigt, ein Unterdruck für die Saugleitung 15 erzeugt wird. Auf der anderen Seite ist das Wegeventil 14 über eine erste Arbeitsleitung 18 mit dem ersten Arbeitsraum 6 verbunden, und über eine zweite Arbeitsleitung 19 mit dem zweiten Arbeitsraum 7 des Arbeitszylinders 1 verbunden. In dieser zweiten Arbeitsleitung 19 ist ein in Richtung zum zweiten Arbeitsraum 7 hin sperrendes Rückschlagventil 21 angeordnet. Außerdem weist diese zweite Arbeitsleitung 19 einen Bypass 22 auf, in dem ein Zeitglied 23 angeordnet ist, welches aus einer Drossel 24 einem Speicher 25 und einem Druckventil 26 besteht, die in Richtung zweiter Arbeitsraum 7 in Reihe geschaltet sind.

Von der ersten Arbeitsleitung 18 zweigt stromab eines Druckventiles 27 eine Steuerleitung 28 ab, die zum pneumatischen Stellmotor 29 des Wegeventils 14 führt. Von dieser Steuerleitung 28 führt eine Entlastungsleitung 31 zur Hauptleitung 11, wobei in dieser Entlastungsleitung 31 ein zur Hauptleitung 11 hin öffnendes Rückschlagventil 32 angeordnet ist.

Der erfindungsgemäße Hubsauger arbeitet wie folgt. Sobald durch das Magnetventil 12 die Druckluftquelle 9 mit dem pneumatischen Steuerblock 2 verbunden wird, strömt die Druckluft über die Hauptleitung 11 einerseits durch die Blasleitung 17 zur Injektordüse 16 und andererseits über die erste Arbeitsleitung 18 zum Arbeitsraum 6 des Arbeitszylinders 1. Der zweite Arbeitsraum 7 des Arbeitszylinders 1 ist über die zweite Arbeitsleitung 19 und deren Bypass 22, sowie die Saugleitung 15 mit der Injektordüse 16 verbunden. Der Kolben 5 des Arbeitszylinders 1 wird dabei aus der Ausgangsstellung, wie sie links in Fig. 1 dargestellt ist, in die Arbeitsstellung verschoben, wie sie rechts dargestellt ist. Bei diesem Hub stößt der Saugnapf 4 auf die Fläche eines Werkstückes, so daß die Luft, die Zufuhr über die Mittelbohrung 8 der Kolbenstange 3 und den offenen Saugnapf 4 gedrosselt abströmen konnte, gestaut wird. Dieser Stau führt zu einem Ansteigen des Druckes in der zweiten Arbeitsleitung 18, so daß ab einem bestimmten Staudruck das Druckventil 27 öffnet und Druckluft über die Steuerleitung 28 zum pneumatischen Stellmotor 29 gelangt. Das Rückschlagventil 32 bleibt aufgrund des höheren Drucks in der Hauptleitung 11 geschlossen. Wenn dieser Staudruck einen gewissen Grenzwert überschritten hat, schaltet das Wegeventil 14 um, so daß die Druckquelle 9 über die zweite Arbeitsleitung 19 und deren Bypass 22 und Zeitglied 23 mit dem zweiten Arbeitsraum des Arbeitszylinders 1 verbunden ist, da das Rückschlagventil 21 in der zweiten Arbeitsleitung 19 sperrt. Durch das Zeitglied 23 wird nunmehr die Druckluft dosiert in den zweiten Arbeitsraum 7 eingeleitet, so daß die Hubbewegung des Kolbens 5 und des Saugnapfes 4 einschließlich nicht dargestelltem Werkstück kontrolliert ist. Der erste Arbeitsraum 6 ist über die Arbeitsleitung 18 und die Saugleitung 15 mit Injektordüse 16 verbunden, so daß in diesem ersten Arbeitsraum 6 der zur Saughaltung notwendige Unterdruck entsteht. Dieser Arbeitszustand wird dann aufrechterhalten, bis das Werkstück entweder an die gewünschte Stelle transportiert ist oder unterhalb des Werkstücks die erforderliche Veränderung stattgefunden hat.

Zum Loslassen des Werkstückes wird das Magnetventil 12 wieder in die gezeigte Ausgangsstellung umgeschaltet, so daß in der Hauptleitung 11 über die Blasleitung 17 der pneumatische Druck zusammenbricht. Das Werkstück wird nunmehr über dem vorgegebenen Platz fallengelassen. Das Wegeventil 14 schaltet dann in die Grundstellung um, da das Rückschlagventil 32 ungehindert öffnen kann.

In Fig. 3 sind als Beispiel 5 pneumatische Steuerblocks 2 mit ihrem jeweiligen Arbeitszylinder 1 parallel geschaltet, indem entsprechende Hauptleitungen 11 vom Verteiler 13 ausgehen. Außerdem ist eine gemeinsame Steuerleitung 33 vorgesehen, die von einem der pneumatischen Steuerblocks 2 von dessen Steuerleitung 28 ausgeht, und wobei jeweils von dieser Steuerleitung 33 die Steuerleitungen 28 abzweigen. Ist ein Teil kleiner als die Fläche, die von den in einer Reihe geschalteten Saugern abgedeckt wird, so können die Sauger, die kein Teil ertastet haben, sich numschalsten. Dies besorgt dann der arbeitende Sauger aus der Reihe, welcher ein Teil ertastet und angesaugt hat, über die Steuerleitung 28. Dadurch kann eine sonst übliche Programmierung eingespart werden. Durch ein willkürlich betätigbares 2/2-Wegeventil 34 kann die Druckluftquelle 9 unmittelbar über eine Steuerleitung 35 mit der Steuerleitung 33 bzw. des Steuerleitungen 28 verbunden werden, so daß hierdurch eine willkürliche Umschaltung der Wegeventile 14 erfolgen kann. In der Steuerleitung 35 ist ein Rückschlagventil 36 vorgesehen.

## Patentansprüche

1. Hubsauger für eine Transporteinrichtung von Werkstücken mit Ansaugflächen
   – mit mindestens einem pneumatisch und doppelt wirkenden Arbeitszylinder, an dessen Kolbenstangenende ein Saugnapf (4) angeordnet ist und dessen Kolben (5) einen ersten, dem Saugnapf abgewandten Arbeitsraum (6) des Zylinders von einem zweiten, dem Saugnapf benachbarten Arbeitraum (7) trennt,
   – mit mindestens einem die Verbindung einer Luftdruckquelle (9) zum Arbeitszylinder sowie dessen Entlüftung steuernden ersten Wegeventil (12) und
   mit einer Einrichtung (16) zur Erzeugung eines Luftunterdrucks für den Saugnapf sowie einem den Luftunterdruck zum Saugnapf steuernden zweiten Wegeventil (14), dadurch gekennzeichnet, daß der erste Arbeitsraum (6) mit dem Saugnapf (4) über eine Drosselleitung (8) verbunden ist, daß als zweites Pneumatikwegeventil (14) ein 4/2 oder 5/2-Wegeventil dient, welches in der einen Schaltstellung den ersten Arbeitsraum (6) mit der Unterdruckeinrichtung (16) und den zweiten Arbeitsraum (7) mit der Druckluftquelle (9) verbindet und welches in der anderen Schaltstellung den ersten Arbeitsraum (6) mit der Druckluftquelle (9) und dem zweiten Arbeitsraum (7) mit der Unterdruckeinrichtung (16) verbindet.

2. Hubsauger nach Anspruch 1, dadurch gekennzeichnet, daß als Unterdruckeinrichtung eine Injektordüse (16) dient, die von der Druckluftquelle (9) her gespeist wird.

3. Hubsauger nach Anspruch 1 oder 2, dadurch gekennzeichnet, daß als Leitung zwischen erstem Arbeitsraum (6) und Saugnapf (4) eine Mittelbohrung (8) in der Kolbenstange (3) dient, die eine dem Saugnapf abgewandte Mündung im Kolben hat.

4. Hubsauger nach einem der Ansprüche 1 bis 3, dadurch gekennzeichnet, daß in der zweitem Arbeitsleitung (19) zwischen zweitem Arbeitsraum (7) und zweitem Wegeventil (14) ein in Richtung Arbeitsraum (7) sperrendes Rückschlagventil (21) angeordnet ist, welches durch einen Bypass (22) umgangen ist, in dem ein pneumatisches Zeitglied (23) vorhanden ist.

5. Hubsauger nach Anspruch 4, dadurch gekennzeichnet, daß als zeitglied (23) eine Drossel (24), ein Speicher (25) und ein Druckhalteventil (26) dienen, die in Reihe geschaltet sind.

6. Hubsauger nach einem der Ansprüche 1 bis 5, dadurch gekennzeichnet, daß das zweite Wegeventil (14) pneumatisch gesteuert ist und daß der Steuerdruck über ein Druckventil (27) und eine Steuerleitung (28) aus der ersten Arbeitseitung (18) entnommen wird, die zwischen dem zweiten Wegenventil und dem ersten Arbeitsraum (6) des Arbeitszylinders (1) verläuft.

7. Hubsauger nach Anspruch 6, dadurch gekennzeichnet, daß die Steuerleitung (28) über ein Rückschlagventil (32) zur Hauptleitung (11) der Druckluftquelle (9) stromauf des zweiten Wegeventils (14) entlastbar ist.

8. Hubsauger nach einem der Ansprüche 4 bis 7, dadurch gekennzeichnet, daß mehrere Arbeitszylinder (1) vorhanden sind und auf jeden Arbeitszylinder ein Steuerblock (2) geflanscht ist, der das zweite Wegeventil (14) mit Steuereinrichtung (27, 28, 29, 32) das Zeitglied (23) und die Injektordüse (16) aufweist.

9. Hubsauger nach Anspruch 8, dadurch gekennzeichnet, daß ein Druckluftverteiler stromab der Druckluftquelle (9) vorhanden ist, von dem die einzelnen Hauptleitungen zu den Steuerblocks (2) abzweigen, und daß stromauf des Druckluftverteilers (13) das erste 3/2-Magnetventil angeordnet ist.

10. Hubsauger nach einem der Ansprüche 6 bis 9, dadurch gekennzeichnet, daß die Steuerleitungen (28) der einzelnen Steuerblöcke (2) miteinander verbunden sind und daß über ein willkürlich betätigbares Ventil (34) die Steuerleitungen unter Luftdruck setzbar sind.

**EP 0 371 974 B1**

**Claims**

1. Suction lifter for equipment for transporting worked pieces with smooth surfaces
   – with at least one pneumatic, double-action working cylinder, at the end of the piston-rod of which a suction head (4) is attached, and the piston (5) of which separates a first working chamber (6) which is connected to the suction head, from a second working chamber (7) adjoining the suction cup,
   – with at least one first switch-over valve (12) which controls the connection from a source of compressed air (9) to the working cylinder and the extraction of air from the same, and
with a device (16) for producing a vacuum for the suction head and a second switch-over valve (14), characterised by the fact that the first working chamber (6) is connected to the suction cup (4) via a throttle valve (8) and by the fact that a 4/2 or a 5/2 switch-over valve serves as a second switch-over pneumatic valve (14) which, switched to the one position connects the first working chamber (6) with the vacuum device (16) and the second working chamber (7) with the source of compressed air (9), and switched to the other position connects the first working chamber (6) with the source of compressed air (9) and the second working chamber (7) with the vacuum device (16).

2. Suction lifter on the lines of Claim 1, characterised by the fact that an injector nozzle (16), which is fed from the source of compressed air, serves as the vacuum device.

3. Suction lifter on the lines of Claim 1 or Claim 2, characterised by the fact that a centrally drilled hole (8) in the piston-rod (3) serves as a pipeline between the first working chamber (6) and the suction cup (4), which opens into the suction cup.

4. Suction lifter on the lines of Claims 1 to 3, characterised by the fact that a back-pressure valve (21) shutting off in the direction of the working chamber (7) is arranged in the second working pipeline (19) between the second working chamber (7) and the second switch-over valve (14), which can be circumvented by a bypass (22) in which there is a pneumatic time unit (23).

5. Suction lifter on the lines of Claim 5, characterised by the fact that a throttle valve (24), storage unit (25), and a pressure-retaining valve (26) arranged in sequence serve as a time unit (23).

6. Suction lifter on the lines of Claims 1 to 5, characterised by the fact that the second switch-over valve (14) is controlled pneumatically, and that the control pressure is drawn from a pressure valve (27) and a control pipeline (28) from the first working pipeline (18) which runs between the second switch-over valve and the first working chamber (6) of the working cylinder (1).

7. Suction lifter on the lines of Claim 6, characterised by the fact that the control pipeline (28) can be discharged via a back-pressure valve (32) to the main pipeline (11) of the source of compressed air (9) downstream of the second switch-over valve (14).

8. Suction lifter on the lines of Claims 4 to 7, characterised by the fact that several working cylinders (1) are present and that one control block (2) is attached by means of a flange to each working cylinder, and each control block controls the second switch-over valve (14) with control units (27, 28, 29, 32) and the time-unit (23) and the injector nozzle (16).

9. Suction lifter on the lines of Claim 8, characterised by the fact that a compressed-air distributor is present downstream of the source of compressed air (9), from which the individual main pipelines branch off to the control blocks (2), and that the first 3/2 magnetic valve is arranged upstream of the compressed-air distributor (13).

10. Suction lifter on the lines of Claims 6 to 9, characterised by the fact that the control pipelines (28) of the individual control blocks (2) are connected to one another, and that the control pipelines can be placed under air pressure via an arbitrarily operated valve (34).

**Revendications**

1. Appareil de levage à ventouse pour une installation de transport de pièces à usiner avec des surfaces appropriées à ce système par aspiration
   – équipé au moins d'un cylindre de commande à effet double et pneumatique dont l'extrémité de la tige porte une ventouse (4); le piston (5) de ce cylindre sépare deux chambres (6 et 7): une première chambre (6) du cylindre éloignée de la ventouse d'une deuxième chambre (7) située près de la ventouse.
   – avec au moins un premier tiroir de distribution (12) qui établit la liaison entre une source de pression (9) et le cylindre et qui commande aussi au désaérage de ce même cylindre
avec un système (16) qui produit une dépression pour la ventouse et aussi avec un deuxième tiroir de distribution (14) qui transmet la dépression. Il en découle les particularités suivantes: la première chambre (6) est en liaison avec la ventouse par le biais d'un canal d'étranglement (8),
pour le deuxième tiroir de distribution pneumatique (14) on utilise un tiroir de distribution de 4/2 ou de 5/2. Ce-

5

lui-ci connecte lors d'une première position de fonctionnement du circuit la première chambre (6) avec le système de dépression (16) d'une part et d'autre part la deuxième chambre (7) avec la source de pression (9) ; dans l'autre position de fonctionnement du circuit il connecte la deuxième chambre (7) avec le système de dépression (16).

2. Selon la description de la revendication 1. l'appareil de levage à ventouse se caractérise de la façon suivante: pour le système de dépression on emploie une tuyère d'injecteur (16) qui est alimentée par la source de pression (9).

3. Selon la description de la revendication 1 ou 2, l'appareil de levage à ventouse présente les caractéristiques suivantes: la connexion entre la première chambre (6) et la ventouse (4) se fait par un alésage central (8) situé dans la tige (3) lequel présente dans le piston une embouchure qui s'ouvre dans le sens contraire à la ventouse.

4. Selon les descriptions des revendications de 1 à 3, l'appareil de levage à ventouse présente les caractéristiques suivantes: au niveau de la deuxième ligne (19) on a prévu entre la deuxième chambre (7) et le deuxième tiroir de distribution (14) un clapet antiretour (21) dans la direction de la deuxième chambre (7). Ce clapet antiretour est contourné par un by-pass (22) qui comporte un relais pneumatique à action différée (23).

5. D'après la description de la revendication 4, l'appareil de levage à ventouse présente la caractéristique suivante: le relais à action différée (23) se compose d'une soupape d'étranglement (24), d'un accumulateur et d'une soupape de pression qui fonctionnement l'un après l'autre.

6. D'après les descriptions des revendications de 1 à 5, l'appareil de levage à ventouse présente la caractéristique suivante: le deuxième tiroir de distribution (14) est commandé pneumatiquement et la pression qui commande cette fonction est prélevée sur la première ligne de commande (18) par une soupape de pression (27) et une ligne hydraulique commandée (28); cette première ligne (18) relie le deuxième tiroir de distribution à la première chambre (6) du cylindre de commande.

7. D'après la description de la revendication 6, l'appareil de levage à ventouse présente la caractéristique suivante: en amont du deuxième tiroir de distribution (14) la ligne hydraulique commandée (28) peut être déchargée en direction de la ligne principale d'alimentation (11) )par le biais d'un clapet antiretour ; cette ligne principale (11) a pour point de départ la source de pression (9).

8. D'après les descriptions des revendications de 4 à 7, l'appareil de levage à ventouse présente les caractéristiques suivantes : la présence de plusieurs cylindres de commande (1); à chaque cylindre de commande est bridé un bloc de commande lequel contient le deuxième tiroir de distribution (14) avec un système conducteur (27,28,29,32), le relais à action différée (23) et la tuyère d'injecteur.

9. D'après la description de la revendication 8, l'appareil de levage à ventouse présente les caractéristiques suivantes: en aval de la source de pression (9) se trouve un distributeur d'air comprimé point de départ des différentes lignes principales qui rejoignent respectivement leur bloc de commande (2); une valve magnétique de 3/2 est nécéssaire en amont du distributeur d'air comprimé (13).

10. D'après les descriptions des revendications de 6 à 9, l'appareil de levage à ventouse présente les caractéristiques suivantes: les lignes hydrauliques commandées (28) des différents blocs de commande (2) sont reliées entre elles , il est possible de provoquer volontairement une pression au niveau de ces lignes en actionnant une soupape (34).

FIG. 1

FIG. 3

FIG. 2

EP 0 371 974 B1